Europäisches Patentamt

European Patent Office

Office européen des brevets

(11) Numéro de publication: **0 411 990 A1**

## (12) DEMANDE DE BREVET EUROPEEN

(21) Numéro de dépôt: 90402123.5

(22) Date de dépôt: 24.07.90

(51) Int. Cl.5: **C08F 210/02**

(30) Priorité: 03.08.89 FR 8910478

(43) Date de publication de la demande:
06.02.91 Bulletin 91/06

(84) Etats contractants désignés:
**AT BE CH DE DK ES FR GB IT LI NL SE**

(71) Demandeur: **ATOCHEM**
**4 & 8, Cours Michelet La Défense 10 10**
**F-92800 Puteaux(FR)**

(72) Inventeur: **Gouarderes, René**
**33, Clos des Arrouturous**
**F-64320 Pau-Idron(FR)**
Inventeur: **Schlund, Bruno**
**15, Avenue de Limburg**
**F-69110 St. Foy les Lyon(FR)**

(74) Mandataire: **Foiret, Claude et al**
**ATOCHEM Département Propriété**
**Industrielle**
**F-92091 Paris la Défense 10 Cédex 42(FR)**

(54) Copolymère de fluorure de vinylidène et d'éthylène, son procédé d'obtention, son application comme agent d'adhésion.

(57) L'invention concerne un copolymère de fluorure de vinylidène et d'au moins un monomère possédant une fonction insaturée polymérisable caractérisé en ce qu'un monomère est l'éthylène.

Le copolymère est obtenu par copolymérisation, en présence d'initiateur de polymérisation radicalaire, du fluorure de vinylidène et d'au moins un comonomère possédant une fonction éthyléniquement insaturé. Le fluorure de vinylidène est copolymérisé avec au moins de l'éthylène en milieu hypercritique sous des pressions comprises entre $6.10^7$ Pa et $3.10^8$ Pa.

Le copolymère peut être utilisé, en particulier, comme intermédiaire d'adhérence entre le polyfluorure de vinylidène ou ses copolymères et les autres résines plastiques non compatibles avec les résines fluorées.

EP 0 411 990 A1

## COPOLYMERE DE FLUORURE DE VLNYLIDENE ET D'ETHYLENE, SON PROCEDE D'OBTENTION, SON APPLICATION COMME AGENT D'ADHESION

La présente invention concerne un copolymère de fluorure de vinylidène et d'au moins un monomère possédant une fonction insaturée polmérisable, un monomère copolymérisé au fluorure de vinylidène étant l'éthylène. Le copolymère est obtenu par copolymérisation sous haute pression du fluorure de vinylidène, de l'éthylène et éventuellement d'un ou plusieurs autres monomères insaturés polymérisables.

L'homopolymère de fluorure de vinylidène est connu pour sa résistance aux solvants courants et pour son incompatibilité avec la plupart des autres résines thermoplastiques en particulier avec les polyoléfines. Le copolymère permet d'associer les propriétés des polymères de fluorure de vinylidène à celles des polymères classiques et particulièrement des polyéthylènes. Ce copolymère étant soluble dans les solvants classiques, tels que les hydrocarbures, peut être utilisé comme résine de base dans les peintures, et en particulier dans les peintures antigraffiti, ou encore comme agent de lubrification (processing aid) dans la transformation des résines thermoplastiques et surtout comme intermédiaire d'adhérence entre le polyfluorure de vinylidène ou ses copolymères et les autres résines plastiques non compatibles avec les résines fluorées, en particulier les polyoléfines et plus particulièrement le polyéthylène.

Ce copolymère à répartition statistique du fluorure de vinylidène contient dans sa molécule entre 0,7 et 37 % en poids de fluorure de vinylidène, et entre 99,3 et 63 % en poids d'au moins un monomère insaturé polymérisable copolymérisé. Etant donné que de l'éthylène doit nécessairement être copolymérisé au fluorure de vinylidène, lorsqu'il est associé à au moins un autre monomère insaturé polymérisable, le copolymèreà répartition statistique contient en général dans ce cas dans sa molécule au moins 20 % poids et de préférence de 20 à 95 % en poids d'éthylène copolymérisé. Alors que la température de fusion de l'homopolymère de polyfluorure de vinylidène varie selon les produits de sensiblement 154° C à 184° C et que celle du polyéthylène radicalaire est d'environ 114-117° C, le copolymère selon l'invention possède un point de fusion généralement compris entre 40° C et 113° C. La température de fusion varie en fonction de la quantité de fluorure de vinylidène contenu dans le copolymère : une température de fusion de sensiblement 85° C correspond à un copolymère contenant sensiblement 37 % en poids de reste de fluorure de vinylidène et une température de fusion de sensiblement 113° C correspond à un copolymère contenant sensiblement 0,7 % en poids de reste de fluorure de vinylidène. Dans ces conditions ces produits présentent l'avantage d'une mise en oeuvre plus aisée que les homopolymères de fluorure de vinylidène et les homopolymères d'éthylène.

Plus un composé polymérique est cristallin, plus sa chaleur de fusion est élevée. Cette chaleur de fusion est mesurée de façon connue au moyen de l'appareil DSC 990 de DU PONT DE NEMOURS utilisé avec une programmation de température de 20° C par minute. La chaleur de fusion des copolymères selon l'invention est comprise entre 30 et 120 joules par gramme. A titre de comparaison la chaleur de fusion du polyfluorure de vinylidène est sensiblement de 55 joules par gramme et celle du polyéthylène radicalaire est sensiblement de 162 joules par gramme.

Les masses moléculaires moyennes en poids des copolymères sont comprises entre 30.000 et 200.000, les copolymères de masses moléculaires moyennes en poids comprises entre 35.000 et 150.000 sont préférées surtout pour leur mise en oeuvre plus aisée. La polydispersité des copolymères, correspondant au rapport $\frac{Mw}{Mn}$ dans lequel représente la masse moléculaire moyenne en poids et Mn la masse moléculaire moyenne en nombre, est comprise entre 1,5 et 5 et de préférence entre 2 et 4.

Le copolymère est obtenu par copolymérisation du fluorure de vinylidène et de l'éthylène, en présence ou non d'au moins un tiers monomère en milieu hypercritique sous des pressions comprises entre $6.10^6$ et $3.10^8$ Pa et de préférence entre $8.10^7$ et $1,5.10^8$ Pa.

La pression critique et la température critique du fluorure de vinylidène sont respectivement sensiblement de $44,3.10^5$ Pa et 30,1° C, les valeurs correspondantes pour l'éthylène sont de $49.10^5$ Pa et 9,5° C.

De façon générale les comonomères polymérisent à l'état gazeux dans le réacteur, éventuellement dilués avec un gaz inerte tel que l'azote ou l'argon, en présence, s'agissant d'une réaction radicalaire, d'un initiateur fournisseur de radicaux libres. Les polymérisations radicalaires étant connues en elles-mêmes, les initiateurs sont classiques. Ils sont habituellement choisis parmi les peroxydes organiques tels que le perbenzoate de butyle ou les peroxydes contenant des fonctions azo. Le rapport molaire initiateur/comonomère est généralement compris entre 15 et 60 ppm et mieux entre 30 et 45 ppm.

Le pourcentage en poids de fluorure de vinylidène dans la charge réactionnelle calculée par rapport au poids du mélange de fluorure de vinylidène et d'éthylène est compris entre 9 et 85. une telle charge permet d'obtenir un copolymère dont la teneur massique en fluorure de vinylidène est comprise entre sensiblement 0,7 et 37 %. Quand un tiers monomère est ajouté, sa quantité dans la charge réactionnelle est comprise entre 5 et 40 % en poids du mélange fluorure de vinylidène et éthylène et de préférence entre 8 et 30 % en poids.

La température de copolymérisation doit être supérieure à la température de décomposition de l'initiateur utilisé. Cette température comprise habituellement entre 100 et 250° C doit être comprise entre la température de décomposition de l'initiateur et la température de décomposition thermique des monomères, mis en oeuvre, à la pression de la copolymérisation.

Lorsque le mélange de monomères et d'initiateur est à la température de décomposition de l'initiateur la température et la pression s'élèvent, la copolymérisation se réalisant très rapidement. Pour une pression donnée la vitesse de réaction est fonction de la quantité d'initiateur mise en oeuvre. Le temps de réaction pour atteindre le maximum de température de réaction peut varier de quelques secondes à quelques minutes, le temps de réaction lui-même ne dépassant généralement pas 40 minutes.

La copolymérisation peut s'effectuer en continu ou en discontinu. La copolymérisation en continu peut s'effectuer, comme toute polymérisation sous haute pression, en réacteur tubulaire, les monomères étant introduits simultanément dans le réacteur, ce dernier étant de préférence à la température de copolymérisation, avec la quantité dosée correspondante d'initiateur éventuellement en solution dans un solvant inerte, tel un hydrocarbure aliphatique comme l'hexane ou l'heptane. Le polymère formé peut être récupéré en continu au moyen d'une vanne de régulation de pression. La copolymérisation en discontinu peut s'effectuer en réacteur équipé de préférence d'un moyen d'agitation, de moyens de chauffage et de refroidissement et muni éventuellement d'un séparateur récupérateur pour récupérer la poudre formée. Dans ce dernier type de copolymérisation il est recommandé d'amener les monomères à l'état gazeux dans le réacteur une température supérieure à la température de décomposition de l'initiateur préalablement à l'ajout progressif de l'initiateur éventuellement dilué dans un solvant inerte. Le copolymère formé peut être récupéré après abaissement de la température et décompression.

La polymérisation haute pression, couramment utilisée dans les polymérisations ou copolymérisations des oléfines, est une réaction présentant des risques d'explosion. Il est donc nécessaire de contrôler soigneusement et de maitriser énergiquement les élévations de température et de pression. Il est également nécessaire d'utiliser un appareillage adapté à ce genre de réaction, et, muni d'au moins un système d'évacuation rapide de son contenu et d'abaissement de pression. En particulier, il est recommandé, de façon connue, d'éviter tout contact des monomères avec un quelconque produit de lubrification que ce soit par exemple dans les systèmes d'introduction des composants de polymérisation ou d'agitation du réacteur.

Afin d'éviter tout emballement de la polymérisation, la réaction peut être maitrisée par exemple selon des moyens ci-après utilisés seuls ou en combinaison.

Un de ces moyens consiste à limiter la quantité d'initiateur à mettre en oeuvre à celle nécessaire pour obtenir une différence de température ($\Delta t$° C) raisonnable entre la température initiale de réaction, généralement celle de décomposition de l'initiateur, et celle atteinte par le pic d'exothermicité dûe à la chaleur de copolymérisation. Ce $\Delta t$° C est de préférence inférieur à 100° C. Tout au moins dans une première copolymérisation, il peut être recommandé d'injecter progressivement l'initiateur afin de déterminer la quantité exacte à mettre en oeuvre dans les copolymérisations suivantes.

Un autre moyen consiste à maitriser la température de réaction en évacuant des calories par exemple par refroidissement du réacteur.

Un troisième moyen consiste à décomprimer plus ou moins partiellement le mélange réactionnel en cours de polymérisation. Pour mettre en oeuvre ce moyen il est recommandé d'avoir des systèmes parfaitement adaptés sur le réacteur. Un système suggéré est un réacteur équipé d'au moins deux vannes d'évacuation rapide montées au plus près du corps du réacteur et possédant des diamètres de passage suffisants pour permettre l'évacuation des gaz de façon pratiquement instantanée.

Au moins un tiers monomère, de préférence exempt d'halogène, peut être ajouté au mélange de fluorure de vinylidène et d'éthylène. Ce monomère polymérisable insaturé contient de préférence dans sa molécule une seule double liaison polymérisable. Il est habituellement choisi parmi les monomères aromatiques comme les styréniques et en particulier le styrène et l'alpha méthylstyrène, les monomères allyliques comme l'alcool allylique, les monomères acides ou anhydrides carboxyliques insaturés comme l'anhydride ou l'acide maléique, les monomères alpha oléfiniques comme le propylène, le butène ou l'hexène, les monomères acryliques comme l'acrylate et méthylacrylate de méthyle ou d'éthyle, les monomères vinyliques comme l'acétate de vinyle.

Quand un tiers monomère intervient dans la polymérisation il peut être introduit dans le milieu réactionnel à tout moment avant le début de décomposition de l'initiateur et de préférence avant l'ajout de l'éthylène quand il s'agit d'un monomère liquide. Dans ce dernier cas, pour une polymérisation en discontinu il est préférable pour une question pratique, d'introduire d'abord dans le réacteur le fluorure de vinylidène puis le tiers monomère et enfin l'éthylène. Dans le cas d'une polymérisation en continu les monomères sont de préférence injectés simultanément en continu.

Lorsque le copolymère est utilisé en tant qu'intermédiaire d'adhérence est particulièrement recommandé le copolymère contenant dans sa molécule de:

7 à 35 en poids et mieux de 10 à 30 de reste de fluorure de vinylidène

30 à 78 en poids et mieux de 40 à 60 de reste d'éthylène

10 à 50 en poids et mieux de 15 à 35 de reste d'au moins un tiers monomère insaturé polymérisable.

Le tiers monomère entrant dans la composition du copolymère peut être choisi parmi ceux définis précédemment ; l'acétate de vinyle, ou son mélange avec un autre monomère insaturé polymérisable est particulièrement recommandé.

Les exemples suivants illustrent l'invention sans la limiter.

## EXEMPLE 1

Dans un réacteur d'un litre de pression de service 2800 bars équipé d'un séparateur récupérateur, d'un agitateur et thermostaté à 150° C on introduit, après une purge à l'azote, à l'abri de l'air 103,25 g de fluorure de vinylidène liquide puis 413,22 g d'éthylène. La pression est élevée à $8.10^7$ Pa. On introduit en 30 secondes 35 cm³ d'une solution de perbenzoate de tertiobutyle à 2 g/l dans l'heptane. La réaction de copolymérisation démarre aussitôt pour atteindre 1 minute après l'introduction la température maximum de 223° C, soit un Δt° C de 73° C. Le maximum de pression atteint est de $1,305.10^8$ Pa. La température et la pression décroissent ensuite. Lorsque la température est redescendue au voisinage de la température initiale, on décomprime et on récupère dans le séparateur récupérateur 52,7 g de copolymère sous forme de poudre. Le taux de conversion massique est de 10,2 %.

Le polymère possède un point de fusion de 112,7° C et contient 2,28 % en poids de fluorure de vinylidène. Sa masse moléculaire moyenne en poids est de 139.000 avec une polydispersité de 3,5. Sa chaleur de fusion est de 118 joules par gramme.

## EXEMPLE 2

Dans le réacteur de l'exemple 1 on introduit, après purge à l'azote et à l'abri de l'air, 700 g de fluorure de vinylidène liquide, puis 122,8 g d'éthylène, soit un mélange à 85,06 % de fluorure de vinylidène. La pression est élevée à $10^8$ Pa. On introduit en 30 secondes 25 cm³ d'une solution de perbenzoate de tertiobutyle à 5 g/l dans l'heptane. La réaction de copolymérisation démarre aussitôt pour atteindre en 2 minutes 30 secondes la température maximum de 192° C, soit un Δt° C de 42° C. Le maximum de pression atteint est de $1,15.10^8$ Pa. La température et la pression décroissent ensuite. Lorsque la température est redescendue au voisinage de la température initiale, on décomprime et on récupère dans le séparateur récupérateur 61,9 g de copolymère soit un taux de conversion massique de 7,5 %.

Le copolymère possède un point de fusion de 86,7° C et contient 36,8% en poids de fluorure de vinylidène. Sa masse moléculaire moyenne en poids est de 92.700 avec une polydispersité de 2,93. Sa chaleur de fusion est de 56,3 joules par gramme.

## EXEMPLE 3

Dans le réacteur de l'exemple 1 on introduit, après purge à l'azote et à l'abri de l'air, 260 g de fluorure de vinylidène liquide, puis 67,5 g d'acétate de vinyle et enfin 307 g d'éthylène. La pression est élevée à $1,1.10^8$ Pa. On introduit en 30 secondes 8,5 cm³ d'une solution de perbenzoate de tertiobutyle à 10 g/l dans l'heptane. La réaction de copolymérisation démarre aussitôt pour atteindre en 40 secondes la température maximum de 202° C, soit un Δt° C de 52° C. Le maximum de pression atteint est de $1,12.10^8$ Pa. La température et la pression décroissent ensuite. Lorsque la température est redescendue au voisinage de la température initiale, on décomprime et on récupère dans le séparateur récupérateur 82 g de terpolymère, soit un taux de conversion massique de 13 %.

Le terpolymère possède un point de fusion de 76,7° C et contient en poids 10,4 % de fluorure de vinylidène et 13,3 % d'acétate de vinyle. Sa masse moléculaire moyenne en poids est de 86.000 avec une polydispersité de 2,7. Sa chaleur de fusion est de 55,6 joules par gramme.

## EXEMPLE 4

Dans le réacteur de l'exemple 1 on introduit, après purge à l'azote et à l'abri de l'air, 260 g de fluorure de vinylidène, puis 14 g de méthylméthacrylate et enfin 403 g d'éthylène. La pression est élevée à 1.10⁸ Pa. On introduit successivement à intervalles de 2 minutes 11, puis 4, puis 4 cm³ d'une solution de perbenzoate de tertiobutyle à 5 g/l dans l'heptane. La réaction démarre et la température s'élève à 168°C 3 minutes après la troisième injection d'initiateur. Le $\Delta t °C$ est de 18°C. Le maximum de pression atteint est de 1,4.10⁸ Pa. La température et la pression décroissent ensuite. Lorsque la température est redescendue au voisinage de la température initiale, on décomprime et on récupère dans le séparateur récupérateur 64 g de terpolymère, soit un taux de conversion massique de 9,45 %.

Le terpolymère possède un point de fusion de 97°C et contient en poids : 11,6 % de fluorure de vinylidène et 14,1 % de méthylméthacrylate. Sa masse moléculaire moyenne en poids est de 58.000 avec une polydispersité de 2,3. Sa chaleur de fusion est de 63,1 joules par grammes.

EXEMPLE 5

Dans le réacteur de l'Exemple 1 on introduit, après purge à l'azote et à l'abri de l'air, 395 g de fluorure de vinylidène, puis 62,5 g d'acétate de vinyle et enfin 187,5 g d'éthylène. La pression est élevée à 1,04.10⁸ Pa. On introduit en 30 secondes 10 cm³ d'une solution de perbenzoate de tertiobutyle à 5 g/l dans l'heptane. La réaction démarre lentement pour atteindre en 6 minutes la température de 168°C soit un $\Delta t °C$ de 18°C. Le maximum de pression atteint est de 1,05.10⁸ Pa. La température et la pression décroissent ensuite. Lorsque la température est redescendue au voisinage de la température initiale, on décomprime et on récupère dans le séparateur récupérateur 61 g de terpolymère, soit un taux de conversion massique de 9,5 %.

Le terpolymère possède un point de fusion de 40,1°C et contient en poids : 19,1 % de fluorure de vinylidène et 21,8 % de vinyle acétate. Sa masse moélculaire moyenne en poids est de 37 000 avec une polydispersité de 2,4. Sa chaleur de fusion est de 31,6 joules par gramme.

Le produit obtenu est utilisé comme liant entre le polyfluorure de vinylidène et le polyéthylène. Entre une feuille de polyéthylène de 160 μm d'épaisseur et une feuille de 50 μm d'épaisseur de polyfluorure de vinylidène on dispose le terpolymère précédent. L'ensemble est soumis au collage à chaud sous une pression de 3 à 6.10⁵ Pa pendant 10 secondes. On obtient une feuille avec une couche intercallaire de terpolymère ; l'ensemble possède une épaisseur de 150 à 300 μm d'épaisseur. Après refroidissement on découpe des bandelettes de 10 mm de large sur lesquelles on effectue l'essai de pelage sur le dynanomètre INSTRON. Sur quatre séries d'échantillons préparés dans ces conditions aux températures de collage de 130°C - 140°C - 150°C et 160°C, les résultats de pelage à la vitesse de 50 mm/min sont respectivement en moyenne pour chacune des séries de 100, 160, 340 et 500 g/10 mm.

EXEMPLE 6

Dans le réacteur de l'exemple 1, on introduit, après purge à l'azote et à l'abri de l'air, 430 g de fluorure de vinylidène puis 105 g d'acétate de vinyle et enfin 195 g d'éthylène. La pression dans le réacteur est alors de 1,03 10⁸ Pa et la température de 147°C. on introduit en 30 secondes 12 cm³ d'une solution de perbenzoate de tertiobutyle à 5 g/l dans l'heptane. La réaction démarre aussitôt et la température s'élève en 150 secondes à 170°C, soit un $\Delta T$ de 27°C.

La pression maximale atteinte est de 1,10 10⁸ Pa.

Lorsque la température est revenue au voisinage de la température initiale, la pression est descendue à 8,50 10⁷ Pa.

On décomprime le réacteur et on recueille 62 g de terpolymère correspondant à un taux de conversion maximum de 8,5 %.

Le terpolymère possède un point de fusion de 40,1°C et contient en poids 13,0 % de fluorure de vinylidène et 28,0 % d'acétate de vinyle. Sa masse moléculaire moyenne en poids est de 111.000 avec une polydispersité de 2,2. Sa chaleur de fusion est de 31,6 % joules par gramme.

Le produit obtenu est utilisé comme liant entre le polyfluorure de vinylidène et le polyéthylène. Entre une feuille de polyéthylène de 160 μm d'épaisseur et une feuille de 50 μm d'épaisseur de polyfluorure de vinylidène, on dispose le terpolymère précédent. L'ensemble est soumis au collage à chaud sous une pression de 3 à 6 10⁵ Pa pendant 10 secondes. On obtient une feuille unique d'une épaisseur de 250 à 300 μm. Après refroidissement, on découpe des bandes de 10 mm de large sur laquelle on effectue l'essai de pelage sur le dynamomètre INSTRON.

Sur deux séries d'échantillons préparées dans ces conditions aux températures de collage de 150°C et 180°C, les résultats de pelage à la vitesse de 50 mm/mm sont respectivement en moyenne pour chacune des séries de > 1500 et 600 g/cm. Dans le premier cas l'adhésion est telle que le complexe est indissociable sans la rupture du film de PE.

EXEMPLE 7

Dans le réacteur de l'exemple 1, on introduit, après purge à l'azote et à l'abri de l'air, 455 g de fluorure de vinylidène, puis 55 g d'acétate de vinyle dans lesquels on a dissous 0,05 g d'anhydride maléique, et enfin 211 g d'éthylène. La pression dans le réacteur est alors de 1,00 10$^8$ Pa et la température de 150° C. On introduit en 30 secondes 13 cm$^3$ d'une solution de perbenzoate de tertiobutyle à 10 g/l dans l'heptane. La réaction démarre aussitôt et la température s'élève en 105 secondes à 217° C, soit un ΔT de 67° C. La pression maximale atteinte est de 1,22 10$^8$ Pa. Lorsque la température est revenue au voisinage de la température initiale, la pression est descendue à 8,75 10$^7$ Pa. On décomprime le réacteur et on recueille 43 g de tétrapolymère correspondant à une conversion maximum de 6 %.

Le tétrapolymère possède un point de fusion de 64,6° C et contient un poids 22,2 % de fluorure de vinylidène, 15,2 % d'acétate de vinyle et 0,08 % d'anhydride maléique.

Sa masse moléculaire moyenne en poids est de 85000 avec une polydispersité de 3.

Sa chaleur de fusion est de 57,3 joules par gramme.


## Revendications

1. Copolymère de fluorure de vinylidène et d'au moins un monomère possédant une fonction insaturée polymérisable caractérisé en ce qu'un monomère est l'éthylène.

2. Copolymère selon la revendication 1 caractérisé en ce qu'il contient dans sa molécule de 0,7 à 37 % en poids de fluorure de vinylidène et entre 99,3 et 63 % en poids d'au moins un monomère insaturé polymérisable copolymérisés.

3. Copolymère selon l'une des revendications 1 ou 2 caractérisé en ce qu'il contient un tiers monomère copolymérisé choisi parmi les monomères insaturés polymérisables.

4. Copolymère selon l'une des revendications 1 à 3 caractérisé en qu'il contient au moins 20 % en poids d'éthylène copolymérisé.

5. Copolymère selon l'une des revendications 1 à 4 caractérisé en ce que le tiers monomère copolymérisé est l'acétate de vinyle ou un monomère acrylique ou méthacrylique.

6. Copolymère selon l'une des revendications 1 à 5 caractérisé en ce que sa masse moléculaire moyenne en poids est comprise entre 30.000 et 200.000.

7. Copolymère selon l'une des revendications 1 à 6 caractérisé en ce que son point de fusion est compris entre 40° C et 113° C.

8. Copolymère selon l'une des revendications 1 à 7 caractérisé en ce que sa chaleur de fusion est comprise entre 30 et 120 joules par gramme.

9. Copolymère selon l'une des revendications 1 à 8 caractérisé en ce que sa polydispersité est comprise entre 1,5 et 5.

10. Procédé de fabrication du copolymère des revendications 1 à 8 par copolymérisation, en présence d'initiateur de polymérisation radicalaire, du fluorure de vinylidène et d'au moins un comonomère possédant une fonction éthyléniquement insaturé caractérisé en ce qu'on copolymérise le fluorure de vinylidène avec au moins de l'éthylène en milieu hypercritique sous des pressions comprises entre 6.10$^7$ Pa et 3.10$^8$ Pa.

11. Procédé selon la revendication 10 caractérisé en ce que le pourcentage en poids de fluorure de vinylidène dans la charge réactionnelle calculée par rapport au poids du mélange de fluorure de vinylidène et d'éthylène est compris entre 9 et 85.

12. Procédé selon l'une des revendications 10 ou 11 caractérisé en ce qu'est ajouté à la charge réactionnelle un tiers monomère choisi parmi les monomères polymérisables insaturés exempts d'halogène.

13. Procédé selon l'une des revendications 10 à 12 caractérisé en ce que le tiers monomère est ajouté dans la charge réactionnelle en quantité comprise entre 5 et 40 % en poids du mélange fluorure de vinylidène et éthylène.

14. Procédé selon l'une des revendications 10 à 13 caractérisé en ce que la température de copolymérisation est comprise entre la température de décomposition de l'initiateur et la température de décomposition thermique des monomères, mis en oeuvre, à la pression de la copolymérisation.

15. Procédé selon l'une des revendications 10 à 14 caractérisé en ce que la quantité d'initiateur mise en oeuvre est telle que pendant la réaction de copolymérisation la différence de température entre celle de décomposition dudit initiateur et celle atteinte par le pic d'exothermicité dûe à la chaleur de copolymérisation est inférieure à 100° C.

16. Intermédiaire d'adhérence entre le polyfluorure de vinylidène ou ses copolymères et une résine plastique non compatible avec les résines fluorées choisi parmi les copolymères des revendications 1 à 9.

17. Intermédiaire d'adhérence selon la revendication 16 caractérisé en ce que le copolymère contient en poids dans sa molécule de :
7 à 35 de reste de fluorure de vinylidène
30 à 78 de reste d'éthylène
10 à 50 de reste d'au moins un tiers monomère insaturé polymérisable.

18. Intermédiaire d'adhérence selon la revendication 17 caractérisé en ce que le tiers monomère insaturé polymérisable est l'acétate de vinyle.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 468 054 (T.A. FORD)<br>* Revendications 1-7 *<br>--- | 1-18 | C 08 F 210/02 |
| Y | US-A-3 449 305 (F.B. STILMAR)<br>* Revendications 1-21; colonne 3, exemple 15 *<br>--- | 1-18 | |
| Y | US-A-2 462 678 (M.J. ROEDEL)<br>* Revendications 1-7; colonne 2; colonne 8, lignes 45-50 *<br>--- | 1-18 | |
| A | US-A-4 123 602 (H. UKIHASHI)<br>* Revendications 1-34 *<br>--- | 1 | |
| A | FR-A-2 103 276 (HOECHST)<br>* Revendications 1-15 *<br>----- | 1 | |

**DOMAINES TECHNIQUES RECHERCHES (Int. Cl.5)**

C 08 F
C 09 J

Le présent rapport a été établi pour toutes les revendications

| Lieu de la recherche | Date d'achèvement de la recherche | Examinateur |
|---|---|---|
| LA HAYE | 19-10-1990 | PERMENTIER W.A. |